# EUROPEAN PATENT SPECIFICATION

(11) **EP 4 172 372 B1**
(45) Date of publication and mention of the grant of the patent: **03.06.2026**
(21) Application number: 21755816.2
(22) Date of filing: 23.06.2021
(51) Int. Cl.: C21B 3/08

(54) **IMPROVED METHOD AND APPARATUS FOR TREATING THE MATERIAL EXITING FROM A LADLE FURNACE**
VERFAHREN UND VORRICHTUNG ZUR BEHANDLUNG DES AUS EINEM PFANNENOFEN AUSTRETENDEN MATERIALS
PROCÉDÉ ET APPAREIL AMÉLIORÉS POUR TRAITER LE MATÉRIAU SORTANT D'UN FOUR-POCHE

(30) Priority: 25.06.2020 US 202063043801 P
(43) Date of publication of application: 03.05.2023
(73) Proprietor: Truyoins S.r.l., 31100 Treviso (IT)
(72) Inventor: CARLESSO, Franco, 31100 Treviso (IT); PIZZATO, Edoardo, 31100 Treviso (IT)
(74) Representative: Braidotti, Andrea
(86) International application number: PCT/IB2021/055566
(87) International publication number: WO 2021/260594

(56) References cited:
- EP-A1- 2 261 383
- WO-A1-2009/069794
- WO-A1-2009/116684
- GB-A- 1 534 528

## Description

The present invention relates to a method for the treatment of the material coming out of a ladle furnace (also called "pouring bucket or boiler"), in particular of the material that is finds/forms at/on the bottom of a ladle furnace and which contains/includes the so-called "white slag", containing lime or lime-based compounds. The present invention also relates to an apparatus for implementing said method. Patent documents GB 1 534 528 A, WO 2009/116684 A1, WO 2009/069794 A1 and EP 2 261 383 A1 disclose a method for treating material from the bottom of a ladle furnace.

Therefore, the method for treating the material leaving the ladle according to the present invention find advantageous use in the technical sector of the production of steel or other metal alloys and, more particularly, in the treatment of the material that is generated or it is located inside the ladle, in particular on/at the bottom of the ladle.

As is known, the electric arc furnace 2 (called "Electric arc furnace", hereinafter "EAF"), used in the steel industry to produce steel starting mainly from ferrous scrap or from highly alloyed iron-based materials - such as direct reduced iron (called "DRI" or "iron sponge"), liquid steel and other precursors of iron - generates an additional material called "steel slag" or "black slag" 13, which forms above the steel melt pool , as a result of the oxidation of the scrap and of the compounds generated by the additives inserted in the charge of the electric arc furnace. Conveniently, from the electric arc furnace 2, the black slag 13 exits separately and previously with respect to the liquid steel 14, also called "tapped". More in detail, the black slag 13 coming out of the furnace 2 is sent to successive stages or treatment stations which are distinct and separate from those envisaged for the treatment of liquid steel 14.

In particular, the liquid steel 14 which is form in the electric arc furnace 2 is discharged from the latter into the ladle furnace 12 (LF). Conveniently, the ladle furnace is generally smaller than the EAF furnace, so as to promptly release the latter, thus allowing it to receive the charges intended for subsequent castings.

In the ladle furnace the phase of slagging of the liquid steel takes place by adding lime, ferro-alloys and other additives (ie other components depending on the specification of the steel to be obtained).

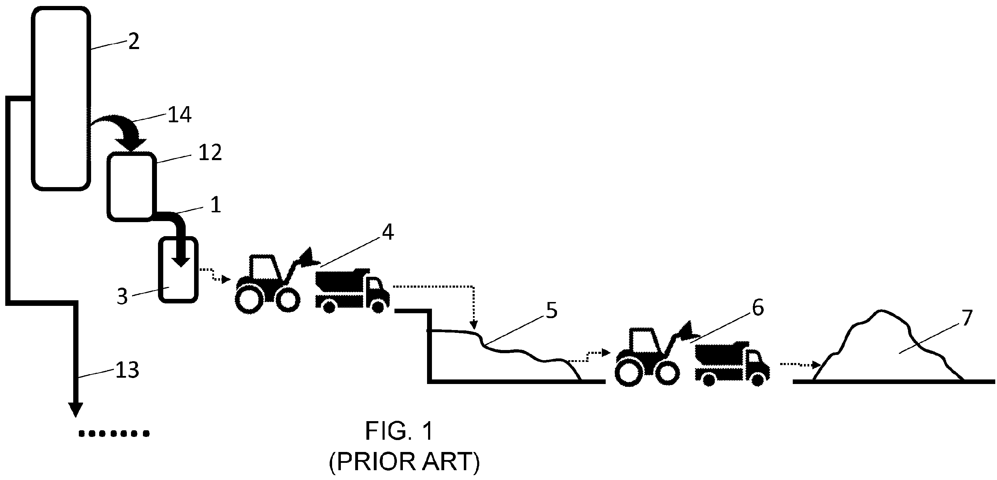

Currently, as shown in fig. 1, the white slag 1 coming out of the ladle furnace is discharged (generally due to the rotation of the furnace) into a cauldron 3 or on the ground.

Subsequently, the white slag thus discharged into the cauldron 3 is loaded and transported by first means 4 - for example a motorized wagon - to a collection area 5, generally shaped like a hole. In particular, in correspondence with the collection area 5, the cauldron 3 is completely overturned, thus discharging the white slag; suitably, if the slag is too dusty, it is taken to an unloading area protected from the wind, for possible reuse in the steelmaking process of steel production.

In the collection area 5, the white slag thus obtained remains for a period generally for about 24-48 hours until it cools undergoing the phase transition - in particular from the "beta" phase to the "gamma" phase, ie the so-called "withering" - which leads to dust.

From the collection area 5, the slag thus cooled is loaded, for example by means of a mechanical shovel, onto second dedicated transport means 6, for example a truck.

Conveniently, these second dedicated means of transport 6 then carry the slag, which has thus become non-recyclable waste, to a landfill area 7.

Furthermore, the collection area 5 and/or the landfill area 7 must be equipped with a for the collection and treatment of leachate deriving from rainwater to which the slag that is stationed in these areas is inevitably subjected. Furthermore, the collection areas 5 and/or the landfill 7 are generally covered by suitable flooring.

In this context, it should also be considered that the recovery of the white slag that is generated during the production/refining of steel allows to achieve two important advantages:
- reduce the use of raw materials such as basic slagging agents and any other elements such as silicates, aluminates and magnesium-based;
- reduce landfill disposal, to the benefit of the ecological/environmental aspect.

The purpose of the invention is to propose a method for treating the material which, in the steel production phase, is formed/found on the bottom of a ladle furnace and which contains the so-called "white slag", containing lime or lime-based compounds, which allow/allow to overcome, at least in part, the drawbacks of the known solutions.

Another object of the invention is to propose a method for treating the material found on the bottom of a ladle furnace in order to be able to suitably enhance it, thus avoiding considering it as a mere non-reusable waste.

Another purpose of the invention is to propose a method for treating the material located on the bottom of a ladle furnace capable of significantly reducing and/or eliminating the emission of fine dust typical of traditional treatment methods of white slag, while maintaining high quality standards (in particular in terms of stability) of the material obtained and safety for operators and equipment.

Another object of the invention is to propose a method for treating the material located on the bottom of a ladle furnace capable of recovering the fraction of steel contained in the bottom of a ladle furnace with a degree of purity close to 100%, thus allowing its reuse as ferrous scrap for subsequent melting, while maintaining high quality standards.

Another purpose of the invention is to propose a method for treating the material located on the bottom of a ladle furnace capable of recovering the steel fraction keeping it distinct from casting to casting, thus allowing its reuse as ferrous scrap with higher added value being able to divide it into certain categories according to subsequent mergers.

Another purpose of the invention is to propose a method for treating the material located on the bottom of a ladle furnace capable of increasing energy efficiency, while maintaining high quality standards (in particular in terms of stability) of the material obtained and safety for operators and equipment.

Another purpose of the invention is to propose a method for treating the material located on the bottom of a ladle furnace that allows/allows to obtain a high quality final product (in particular in terms of stability), to be reused within the same steel production process or in other applications.

Another object of the invention is to propose a method which allows to considerably reduce the spaces required for the treatment of the material found on the bottom of a ladle furnace.

Another object of the invention is to propose a method which reduces or avoids the movement between various zones and/or stations of the material which is on the bottom of a ladle furnace and which contains, at least in part, white slag.

Another object of the invention is to propose a method which does not require loading and moving means between various areas and/or stations of the material which is on the bottom of a ladle furnace and which contains, at least in part, white slag.

Another object of the invention is to propose a method which allows to reduce the treatment costs of the material which is on the bottom of a ladle furnace and which contains, at least in part, white slag.

Another object of the invention is to propose a method which allows to considerably reduce the times for the treatment of the material which is on the bottom of a ladle furnace and which contains, at least in part, white slag.

Another object of the invention is to propose a method which is highly eco-compatible.

Another object of the invention is to propose a method that does not require/require the implementation of plants for the treatment of leachate.

Another object of the invention is to propose a method that does not require/require the construction of complex and expensive structural or cladding/flooring works.

Another object of the invention is to propose a method which is/are usable/s substantially in all steel mills.

Another object of the invention is to treat the material found on the bottom of a ladle furnace and which contains, at least in part, white slag in much smaller spaces.

Another purpose of the invention is to propose a method for treating the material located on the bottom of a ladle furnace - and which contains, at least in part, white slag - which allows/allows to obtain a high energy efficiency.

Another object of the invention is to propose a method for treating the material located on the bottom of a ladle furnace which is/are easily implemented and with low costs.

Another object of the invention is to propose a method for treating the material located on the bottom of a ladle furnace which is/is an alternative and an improvement with respect to known solutions.

All these purposes, both individually and in any combination thereof, and others which will emerge from the following description, are achieved, according to the invention, with a method of treating the material found on the bottom of a ladle furnace with the characteristics indicated in the claim 1.

The present invention relates to a method for treating the material formed/found at the bottom of a ladle furnace, said material comprising white slag containing lime or lime-based compounds and also comprising a metal alloy, preferably steel , in the molten or semi-molten/viscous state, characterized in that said material leaving said ladle furnace is cooled for a period of time less than about 30-45 minutes, preferably for less than 10-15 minutes, and even more preferably for less than 1-3 minutes.

The present invention also relates to a method for treating the material formed/found at the bottom of a ladle furnace, said material comprising white slag containing lime or lime-based compounds and also comprising a metal alloy, preferably steel, at molten or semi-molten/viscous state, characterized by the fact that the material leaving the ladle furnace cools in such a time as to obtain agglomerates formed by grains of average size greater than about 1mm and in such a time as to block the mineralogical structure of the agglomerates, and in particular of the dicalcium silicate deriving from the white slag contained in the material, in the β phase,.

The present invention also relates to a cooling device 20, a tubular reactor rotating around its longitudinal development axis, configured to indirectly cool the material which passes through it and which is movable between the ladle furnace outlet to thus receive the material - which is formed/located at the bottom of a ladle furnace and which comprises white slag containing lime or lime-based compounds and which also comprises a metal alloy, preferably steel, in the molten or semi-molten/viscous state - and an area which it is spaced from the outlet of the ladle furnace, an area which is preferably defined by a treatment and/or storage and sorting station.

The present invention is further clarified hereinafter in some of its preferred embodiments reported for purely illustrative and non-limiting purposes with reference to the attached drawings, in which:
- Figure 1: shows a schematic general view of a slag treatment method white according to the state of the art,
- Figure 2: shows a schematic general view of a (first) embodiment of the apparatus according to the invention for the treatment of the material that is formed/found on/at the bottom of the ladle furnace, and

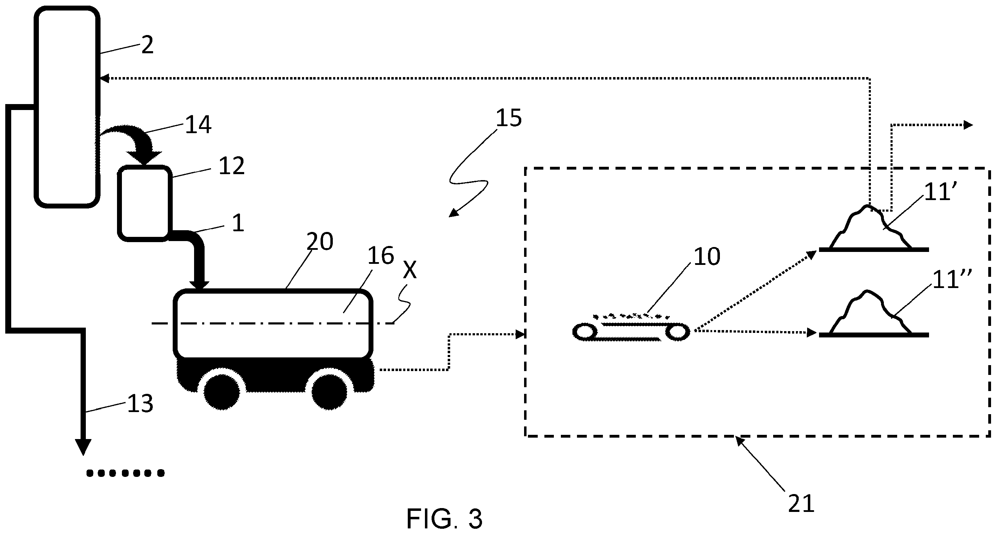

- Figure 3: shows in a schematic general view a second embodiment of the apparatus according to the invention,
- Figure 4: shows in a schematic general view a third alternative embodiment of the apparatus according to the invention.

The present invention relates to a method indicated as a whole with the reference number 15, for the treatment of the material 1 which, in the production phase of steel or other metal alloys, is formed/found on/at the bottom of a ladle furnace 12 and which includes the so-called "white slag", containing lime or lime-based compounds.

Preferably, the material 1 found on the bottom of the ladle furnace 12 comprises white slag and a metal alloy in the molten or semi-molten/viscous (ie liquid or fluid) state. In particular, the metal alloy can preferably be steel but it could be other metal alloys, for example aluminum or copper.

In particular, the term "white slag" hereinafter refers to a waste deriving from the refining processes of a metal alloy, in particular of steel, during the production chain of the alloy itself, in particular of steel. In particular, white slag is a waste material very rich in lime and/or other binders and therefore advantageously recoverable.

The method will be described below with particular reference to steel, however it is understood that - correspondingly - other metal alloys or metals (for example copper and aluminum) could be provided.

In particular, the ladle furnace 12 receives the liquid steel (called "tapped") 14 which is formed in an electric arc furnace 2, preferably electric arc furnace (also known as "EAF"), which is used in the steel industry to produce steel starting mainly from ferrous scrap, as well as from highly alloyed iron-based materials, such as direct reduced iron (called "DRI" or "iron sponge"), liquid steel and other precursors of iron.

Conveniently, in a traditional way, the black slag 13 is also formed inside the electric arc furnace 2 (ie the slag that forms, above the steel melting bath, as a result of the oxidation of the scrap and of the compounds generated by the additives inserted in the charge of the electric arc furnace to produce steel starting from the scrap) and which is discharged at the outlet from the electric arc furnace 2 to be treated separately and dedicatedly with respect to the liquid steel 14.

Advantageously, the apparatus 15 according to the present invention can be operatively associated with a plant for the production of steel and/or its derivatives or variants.

Conveniently, the apparatus 15 according to the present invention is suitable for use in a plant for the recovery of the material 1 which, in the production phase of steel or other metal alloys, is formed/found on the bottom of a ladle furnace 12 and which contains/includes white slag as well as molten or semi-molten/viscous steel. Hereinafter, "material 1" means the material that forms/finds on the bottom of a ladle furnace 12 (ie in the area of the furnace 12 closest to the bottom) and that contains/includes white slag (containing lime or based compounds lime) and also steel (or other metal alloy) in the molten or semi-molten/viscous state.

The method according to the invention provides for cooling the material 1 leaving the ladle furnace 12.

Preferably, the method according to the invention provides for immediately cooling the material, containing/comprising white slag and molten or semi-molten/viscous steel (ie liquid or fluid), which comes out of the ladle furnace 12 and which is formed/found on the bottom of the ladle furnace 12.

Preferably, the method according to the invention provides for cooling the material 1 immediately after its exit from the ladle furnace 12.

Conveniently , the method provides for cooling the material 1 leaving the ladle furnace 12 and which is at a temperature corresponding to or close to the melting temperature of the steel, ie it is at a temperature of about 1400-1800°C, preferably of about 1600°C.

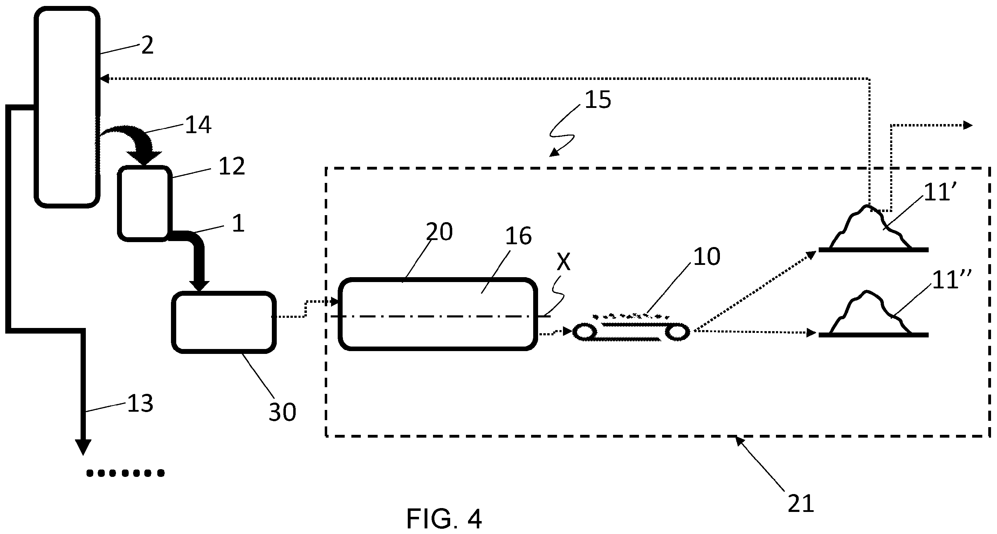

Preferably, in a possible implementation variant, the method according to the invention provides for cooling the material 1 immediately after having been discharged from the ladle furnace 12 into a cauldron 30 (see Fig. 4).

The material 1 leaving the ladle furnace 12 is cooled indirectly, ie by indirect contact between the material 1 and a cooling fluid (for example air and/or water).

For this purpose, the material 1 is discharged into a device 20 for cooling the material 1 The material 1 leaving the ladle furnace 12 is discharged into a device 20 for indirect cooling of the material 1, ie a device which is configured to cool the material 1 in the face of an indirect heat exchange (ie without contact) between the material 1 that enters and/or passes through the device and a cooling fluid that enters and/or passes through said device 20.

The cooler 20 is a tubular reactor.

Preferably, the cooling device 20 is a rotating tubular reactor, in particular it rotates around its longitudinal axis X in a clockwise and/or anti-clockwise direction. Preferably, the cooling device 20 is a rotating tubular reactor in which its longitudinal axis X can be inclined with respect to the horizontal. In a possible embodiment, the cooling device 20 comprises a rocking reactor. In a possible embodiment, the cooling device 20 comprises a vibrating reactor. In a possible embodiment, the cooling device 20 comprises a floating reactor.

Conveniently, the material 1 which forms and is located on the bottom of the ladle furnace 12 is discharged (generally due to the rotation of the furnace) directly and immediately inside the cooling device 20. In particular, the cooling device 20 is positioned and/or it can be positioned at the exit of the material 1 from the ladle furnace 12.

Preferably, the cooling device 20 can be mobile.

Advantageously, the cooling device 20 can be mounted on a support structure provided with movement means, such as wheels or tracks, to thus allow the movement of the cooling device towards/away from/to the ladle furnace 12 and/or in correspondence with of the ladle furnace 12

Conveniently, the cooling device 20 of the material treatment apparatus 15 can comprise a wall which internally delimits a chamber 16 for receiving and passing through the material 1 to be cooled, extending between an inlet opening for the material 1 to be cooled and an outlet opening for the cooled material.

Preferably, the inlet opening of the cooling device 20 receives the material 1 which exits directly from the ladle furnace 12. In a possible alternative embodiment, the inlet opening of the cooling device can receive the material 1 from a pan which, in turn, receives said material 1 directly from a corresponding outlet of the ladle furnace 12.

Conveniently, the cooling device 20 can comprise a loading hopper (not shown) to convey the material 1 directly from the provided outlet into the device itself at the ladle furnace 12 and/or immediately after its exit from said furnace.

Advantageously, a protection grid, preferably vibrating, can be provided at the inlet opening of the cooling device 20 to prevent any pieces of scrap not yet melted present on the furnace from entering the cooling device.

In a preferred embodiment, the cooling device 20 of the apparatus 15 for treating the material 1 which is formed/located at the bottom of the ladle furnace 12 can comprise at least one rotating reactor (or drum), with a substantially tubular development ( preferably cylindrical), provided with at least one wall which internally delimits a chamber 16 for receiving and passing through the material 1 to be cooled, extending between an inlet opening for the material 1 to be cooled and an outlet opening for the cooled material.

Advantageously, the cooling device 20 can comprise a rotating reactor for the treatment of the slag which can be of any traditional type.

Preferably, the cooling device 20 comprises cooling means (not shown) for the wall which delimits the chamber 16 inside it, to thus indirectly cool the material 1 which passes through said chamber.

Conveniently, the cooling device 20 comprises means for indirectly cooling the material 1 which is/forms on/at the bottom of the ladle furnace 12 which passes through said chamber 16 and, in particular, these means may comprise:
- means (e.g. nozzles) for spraying a cooling fluid (preferably water) on the outer surface of said wall,
- means for dropping, ie mainly or solely by gravity, a cooling fluid (preferably water) on the external surface of said wall,
- refrigerating plates fixed to said wall and comprising ducts for the circulation of a refrigerant fluid, and/or
- at least one interspace, possibly made by means of modular panels, which is externally defined around said wall and which defines a chamber permeated by a cooling fluid.

Preferably, said cooling means of the supply device 20 can comprise at least one cooling fluid distribution circuit arranged at least partially around the device and configured to receive a cooling fluid (preferably water) from the supply means.

Operationally, the cooling fluid acts on the wall of the chamber 16 in such a way as to cool said wall, and consequently also indirectly cool the material 1 contained in said chamber.

Advantageously, the apparatus 15 according to the invention further comprises means for feeding at least one cooling fluid (preferably water) to the cooling means (not shown) of the cooling device 20.

Conveniently, the means for feeding the cooling fluid are fluidically connected at the inlet to the cooling means to thus supply the latter with the cooling fluid.

Preferably, the cooling fluid supply means comprise at least one fluidic circuit which is connected at the inlet with an external supply, in particular mains water, of the cooling fluid, while at the outlet it is connected with the cooling means of the device.

Conveniently, the method according to the invention provides for cooling, preferably indirectly, the material 1 from an inlet temperature T_{IN} (in which the white slag and the steel present in the material itself are at the temperature of the end of the tapping process of the steel, ie in liquid or solid phase) - until it reaches at least an outlet temperature T_{OUT} which is lower than T_{IN}. Conveniently, at the outlet temperature T_{OUT}, the material is in the solid state, in the form of aggregates as described in more detail below; in particular, at the outlet temperature T_{OUT}, the material is in the form of solidified aggregates.

Conveniently, the method according to the invention provides for cooling, preferably indirectly, the material 1 from a temperature T₁ to a temperature T₂ which is lower than T₁.

Conveniently, the temperatures T₁ and T₂ - which are included within the temperature interval defined between T_{IN} and T_{OUT}, or correspond respectively to T_{IN} and T_{OUT} - are the temperatures within which the change in state/phase of the material 1 occurs.

For example, the temperature T₁ can be about 700-900°C, preferably about 800°C, while the temperature T₂ (which is lower than T₁) can be about 400- 600°C, preferably about 500°C.

Conveniently, it is understood that the temperatures T₁ and T₂ are variable according to the composition of the material 1.

Conveniently, the temperature T₁ can be equal to or lower than a temperature T_{IN} corresponding to the temperature of the material 1 leaving the ladle furnace 12 ; for example, the temperature T_{IN} can be about 1400-1800°C, preferably about 1600°C - 1700°C.

Conveniently, the cooling of the material 1 leaving the ladle furnace 2, and in particular the passage from temperature T₁ to temperature T₂ or the passage from the temperature T_{IN} to the temperature T_{OUT} takes place inside the cooling device 20 in such a time as to block the agglomerates deriving from the white slag contained in the material 1 in a crystalline phase, preferably in the β phase, thus substantially avoiding the transitions in different/other solid phases (crystalline and/or amorphous) which, causing volume variations, would cause cracks or disintegration of the agglomerate.

Conveniently, the cooling of the material 1 leaving the ladle furnace 2, and in particular the passage from temperature T₁ to temperature T₂ or the passage from the temperature T_{IN} to the temperature T_{OUT} takes place inside the cooling device 20 in such a time as to block the agglomerates deriving from the white slag contained in the material 1, and in particular the dicalcium silicate present, in a crystalline phase, preferably in the β phase, which is different from the stable phase at room temperature which would have been obtained by slower cooling (ie for example with a transition time from T₁ to T₂ greater than about 15min). Preferably, with the method according to the invention, all or most of the grains of the agglomerates containing dicalcium silicate and deriving from the white slag leaving the cooling device 20, are completely or mostly in a crystalline phase which is different from the stable phase at room temperature which would have been obtained by slower cooling (ie for example with a transition time from T₁ to T₂ greater than about 15min).

Conveniently, the cooling of the material 1 leaving the ladle furnace 2, and in particular the passage from temperature T₁ to temperature T₂ or the passage from the temperature T_{IN} to the temperature T_{OUT}, takes place in a time such as to block in phase β the mineralogical structure of all or most of the agglomerates deriving from the white slag contained in material 1.

Conveniently, the passage from temperature T₁ to temperature T₂ is particularly rapid in such a way as to prevent the transformation of the white slag - and in particular of at least a part - preferably of the majority - of the Dicalcium Silicate present in said white slag - from phase β to phase γ, preferably occurs in less than (about) a minute, to allow the solidification of the material 1 and also the distinct and separate agglomeration of the white slag from the steel. In particular, this allows the formation of first stable solid agglomerates with the components of the white slag contained in material 1 and of second/distinct solid agglomerates with the components of steel (or other metallic materials) contained in material 1. More in detail In this way, the agglomeration of the components of the white slag occurs in a distinct and separate way from the agglomeration of the components of the steel (or other metallic materials).

Conveniently, the fact that the cooling from T₁ to T₂ takes place inside the cooling device 20 which is rotating causes the components of the white slag contained in the material 1 to agglomerate separately from the components of the steel (or other metallic materials) contained in the same material 1.

Advantageously, the agglomerates of white slag and the agglomerates of steel (or other metallic materials), thus obtained, are more compact and less dusty (ie they are formed by grains of average size greater than 1mm ) and the mineralogical structure is advantageously blocked in one phase, preferably in the "beta" phase.

Conveniently, the method according to the invention provides for the cooling, preferably indirectly, of the material 1 leaving the ladle furnace 12, and which is at a T_{IN}, until it is first brought to said temperature T₁ and then until it is brought into a rapid at temperature T₂.

Conveniently, the temperature T₂ can be equal to or greater than a temperature T_{OUT} which corresponds to the outlet temperature from the cooling device 20 of the agglomerates formed, inside the device itself, starting from the material 1. The temperature T_{OUT} is suitable for the subsequent handling of the slag 1. The temperature T_{OUT} is equal to or lower than about 180 - 200°C, preferably it is equal to or lower than about 70 - 100°C.

Conveniently, the inlet temperature T_{IN} of the material 1 in the cooling device 20 can be equal to or greater than the temperature T₁, while the outlet temperature T_{OUT} of the agglomerates - which are formed in the face of the rapid transition from temperature T₁ to T₂ - can be at or below the temperature T₂.

Conveniently, T₂ is ≥ a T_{OUT}. Basically, the temperature T₂ can correspond to the final cooling temperature that the agglomerates reach at the exit of the cooling device, or it can correspond to an intermediate cooling temperature which is higher than the temperature T_{OUT} that the agglomerates reach at the exit of the cooling device.

Conveniently, in the method according to the invention, the cooling rate of the material 1, which is formed at/on the bottom of the ladle furnace 12 and contains the white slag and the molten or semi-molten/viscous steel, and in particular the cooling rate in the passage from temperature T₁ to T₂, is such as to cause the stabilization of the components of the white slag and the separation of the steel into corresponding and separate non-dusty agglomerates, ie with grains having an average size greater than about 1mm, with the formation of mineralogical structures that are stable at temperatures equal to or lower than T₂.

Conveniently, in the method according to the invention, the cooling of the material 1 leaving the ladle furnace 12 is carried out in a time shorter than the duration of the steel melting cycle inside the electric arc furnace and, in particular, takes place in less than approximately 30-45 minutes, preferably in less than about 10-15 minutes and, even more preferably, in less than about 1-3 minutes.

Preferably, the cooling device is configured in such a way that the cooling rate of the material 1 - and in particular the time of passage of the material 1 from the temperature T₁ (which corresponds to the transformation start temperature of the material 1) to the temperature T₂ ( which corresponds to the temperature at the end of transformation of the material 1) or T_{OUT} (which also corresponds to the temperature of the agglomerates leaving the cooling device) - is lower than the duration of the steel melting cycle inside the electric arc furnace and, in in particular, it takes place in less than about 30-45 minutes, preferably in less than about 10-15 minutes and, even more preferably, in less than about 1-3 minutes.

Conveniently, the cooling of the material 1 inside the cooling device, and in particular the permanence time of the material 1 inside said device, is carried out in a time shorter than the duration of the melting cycle of the steel inside of the electric oven and, in particular, takes place in less than about 30-45 minutes. Advantageously, this allows the cooling device to be promptly released from the cooled material 1, in order to be able to receive the material 1 generated in the subsequent melting cycle.

The method according to the invention provides for treating the agglomerates, leaving the cooling device 20, so as to separate the agglomerates deriving from the solidification of the components of the white slag from the agglomerates deriving from the solidification of steel (or other metal alloys). Basically, the agglomerates leaving the cooling device 20 comprise a mixture of two different types of agglomerates - ie the agglomerates deriving from the solidification of the components of the white slag from the agglomerates deriving from the solidification of steel (or other metal alloys) - and suitably, the method according to the invention provides for a separation step of said agglomerates so as to obtain a first group 11' which substantially contains only agglomerates deriving from the solidification of the components of the white slag and a second group 11" which substantially contains only agglomerates deriving from the solidification of steel (or other metal alloys).

Conveniently, this step of separating the agglomerates can be carried out by using magnetic means which thus attract the agglomerates deriving from the solidification of the steel and therefore containing ferromagnetic materials from the agglomerates deriving from the solidification of the white slag.

Conveniently, this step of separating the agglomerates can be carried out by using traditional separation means, for example by density, which thus separate the agglomerates deriving from the solidification of the steel from the agglomerates deriving from the solidification of the white slag.

Preferably, the method according to the invention then provides that the agglomerates obtained at the outlet from the cooling device 20, and suitably already separated between agglomerates of different chemical composition, are further sieved, in order to separate the finer pieces/agglomerates from the more large in two or more groups.

The treatment apparatus 15 according to the invention comprises, downstream of the cooling device 20, a separation module 10 to thus separate the agglomerates deriving from the solidification of the white slag from the agglomerates deriving from the solidification of the steel into corresponding and distinct groups 11' and 11" containing only/mainly agglomerates of one type.

Advantageously, downstream of the separation module 10, a further sieving module can be provided to separate the finer pieces from the larger ones.

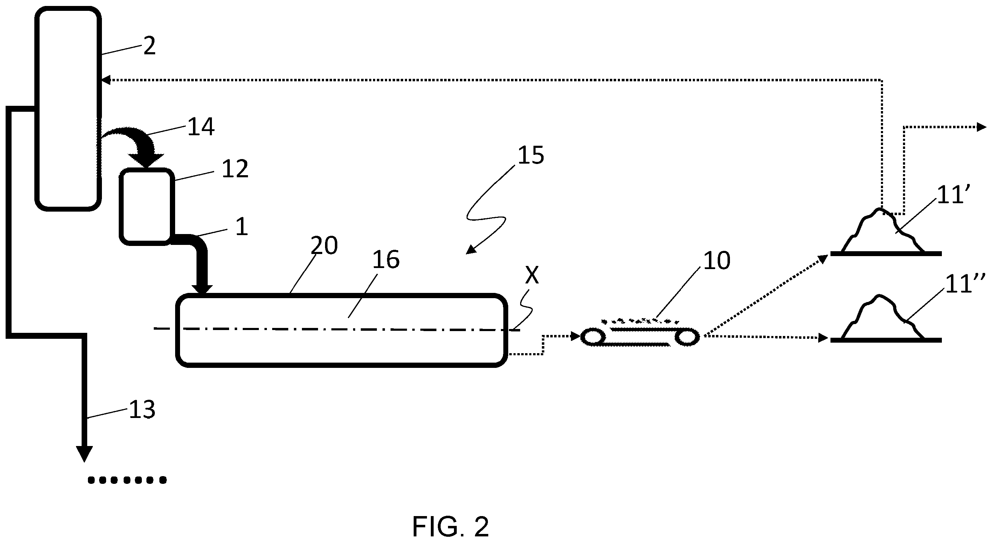

Conveniently, in a possible embodiment of the cooling apparatus (see Fig. 2), the cooling device 20 and the separation module 10 can be defined by distinct and independent machines/equipment positioned in sequence.

Conveniently, in another possible embodiment of the cooling apparatus 15 (not shown), the cooling device 20 and the separation module 10 are defined in sequence within the same apparatus/machine.

Preferably, in a possible embodiment not shown, the cooling apparatus can also comprise a crushing module, which can be positioned upstream or downstream of the separation module 10.

Advantageously, in a possible embodiment, the means of powering the cooling device 20 receive the cooling fluid from the same water network that feeds a steel production plant and/or the like.

The cooling fluid advantageously comprises water, in particular already used or usable in the steel production plant.

More in detail, the feeding means of the cooling device 20 take the high-pressure cooling fluid from an upstream plant, in particular from a steel production plant and transport it to the cooling means of the cooling device 20.

Advantageously, the chamber 16 of the cooling device 20 is configured to advance the material 1 to be cooled in a first direction of movement. Conveniently, the cooling means can be configured to move the cooling fluid from an inlet section to said outlet section in a second direction at least partially opposite with respect to said first direction. In particular, the cooling fluid acts externally on the chamber 16 crossing it along its longitudinal development in a direction which is opposite to that with which the material 1 to be cooled passes through/advances inside said chamber.

In accordance with a preferential embodiment, the reactor of the cooling device 20 preferably has a substantially cylindrical shape and extends along a main axis X between a first end (not shown), in which the inlet opening is provided, and a second end, in which the outlet opening is made. Preferably, the first direction of movement of the material 1 to be cooled is substantially parallel to the main axis X and turned from the inlet opening towards the outlet opening.

Advantageously, the reactor of the cooling device 20 is made of thermally conductive material, in particular it is made of metallic material, such as for example steel.

Conveniently, in order to cool the material 1 in an optimal manner and cause the formation of agglomerates of two different types (ie to ensure that the components of the white slag solidify separately from the components of the molten or semi-molten/viscous steel, thus obtaining a mixture with two types of agglomerates of different chemical composition), the reactor of the cooling device 12 is rotatably mounted on a support structure and can be rotated around the main axis X by motorization means.

Advantageously, the support structure is intended to be rested on the ground and comprises at least one lower support base and is preferably made of metallic material.

Preferably, the support structure supports the reactor in such a way that its main axis X is substantially horizontal, or more precisely that it is at least partially inclined, from a greater height in correspondence with the inlet opening, to a smaller height in correspondence with the exit opening. Conveniently, further motorization means (not shown) can be provided to vary the inclination of the reactor with respect to the horizontal.

Conveniently, the cooling device 20 comprises at least one electronic control unit (not shown) which is electronically connected to the motorization means and programmed to control them to vary the rotation speed of the reactor and/or the inclination of the reactor with respect to the horizontal. Preferably, the electronic control unit is programmed to control the rotation of the reactor in a first direction of rotation, for example clockwise, or counterclockwise. Conveniently, the electronic control unit can be programmed to rotate the reactor in more than one direction of rotation, alternately, in order to mix the material 1 inside the chamber 16 and increase the cooling efficiency of the device 20.

Conveniently, the cooling device 20 comprises at least one temperature sensor operatively associated with the reactor, electronically connected to the electronic control unit and configured to detect at least one temperature measurement of the reactor and/or of the material 1 to be cooled. The electronic control unit is advantageously configured to receive the temperature measurement and correspondingly control the motorization means for varying the rotation speed of the reactor and/or the inclination of the reactor.

Advantageously, the electronic control unit comprises at least one microcontroller, such as for example a PLC (programmable logic controller) or the like. Preferably, the electronic control unit further comprises at least one processing module programmed to process the temperature measurement and the flow measurement and generate a corresponding first control signal for the drive means.

Conveniently, the electronic control unit can be connected to the sensors and to the motorization means in any manner known per se to those skilled in the art and therefore not described in detail below. For example, the electronic control unit may provide for a wired connection or a wireless connection (wireless) without thereby departing from the scope of protection of this patent.

Advantageously, in a possible embodiment, the apparatus 15 for treating the material 1 coming from the bottom of the ladle furnace 12 comprises a unit for sending a nebulized cooling fluid (preferably water), for example by means of compressed air, directly onto the material 1 at the exit from the ladle furnace 12. Conveniently, in a possible embodiment, the unit for sending a nebulized cooling fluid can be provided at the exit of the material 1 from the ladle furnace 12, and be positioned at upstream and externally with respect to the device 20 for indirect cooling of the material 1. Conveniently, in a possible embodiment, the unit for sending a nebulized cooling fluid can be provided inside - and preferably at the inlet - of the device 20 for indirect cooling of the material 1.

Conveniently, the method according to the invention provides for cooling the material 1, which is formed/located at/on the bottom of the ladle furnace 12 and which comes out of the ladle furnace itself, indirectly and/or by direct contact with a nebulized cooling fluid, in particular with nebulized water, for example by means of compressed air. Preferably, the method according to the invention provides for cooling the material 1 leaving the ladle furnace 12 first by means of a nebulized cooling fluid and subsequently by indirect cooling (ie by indirect heat exchange between a cooling fluid and the material 1). Conveniently, the nebulized cooling fluid can be the same or even different from the cooling fluid used for indirect heat exchange.

Conveniently, in one of its possible embodiments, the method according to the invention provides for cooling the material 1 leaving the ladle furnace 12 by means of a jet/spray of a mix (for example an aerosol) of a gas (preferably air or other inert gas) and drops of a liquid (preferably water or other coolant). In particular, this mix of gas and liquid is sent directly on the material 1. Conveniently, the gas acts mainly or only as a transport carrier for the drops of coolant (preferably water) so that, going into direct contact with the material 1, said drops of liquid cause the latter to cool and at the same time evaporate (ie change state), thus avoiding the need to set up a plant for collecting the leachate for the liquid. Advantageously, moreover, the use of a mix of air and water allows to reduce the amount of air used compared to known solutions in which air alone is used, and also avoids excessive consumption of water (which instead is of the order of tens of liters per minute).

Conveniently, for this purpose, a module (not shown) can be provided configured to generate and send a jet/spray of said mix of gas and liquid drops towards the material 1 coming out of the ladle furnace 12 and containing the material that is formed. located on/in correspondence with the ladle furnace 12. Advantageously, said module is configured in such a way that the jet/spray, of said mix of gas and liquid drops, pushes the material 1 leaving the ladle furnace 12 against a wall of a container, so that the material 1 cooled by the drops of liquid then falls onto a conveyor belt to make it move forward towards the modules or the subsequent treatment stations (separation 10).

Conveniently, said module can be provided in place of and/or in addition to the device 20 for indirect cooling of the material 1. Conveniently, said module can be provided externally to the cooling device 20 and be positioned at the inlet/upstream of the indirect cooling means of the material 1. Conveniently, said module can be provided externally to the cooling device 20 and be positioned at the inlet/upstream with respect to the indirect cooling means of the material 1.

The method according to the invention therefore provides for cooling in a manner particularly fast - preferably in less than about 30-45 minutes, more preferably less than about 10-15 minutes and even more preferably less than 1-3 minutes - the material 1 immediately exiting the ladle furnace 12 or immediately after collection of said material in a cauldron.

Advantageously, the method according to the present invention provides that the agglomerates of white slag, once separated from the agglomerates deriving from the solidification of steel or other metal components, can be reused within the production/refining process of steel or other metal alloys. Preferably, the method according to the present invention provides that the agglomerates of white slag, once separated from the agglomerates deriving from the solidification of the steel or other metal components, are reintroduced inside the electric arc furnace 2 (EAF). Preferably, the agglomerates of the first group 11' - which substantially contains only agglomerates deriving from the solidification of the components of the white slag - are placed in the electric arc furnace 2.

This is particularly advantageous since, by reusing the agglomerates of white slag inside the process, the amount of white slag to be disposed of is reduced/eliminated, while the production of black slag is increased, which is less expensive to dispose of and which can be used as a secondary raw material.

Furthermore, by reusing the white slag within the process - thus cooled and treated with the method according to the invention - the quantity of "new" and further lime and/or other components (for example magnesite) to be introduced into the bath of the invention is reduced. electric arc furnace 2; advantageously, moreover, this allows to reduce the consumption of the refractory material which is fixed to the walls of the electric arc furnace 2.

Advantageously, the method according to the present invention provides that the agglomerates deriving from the solidification of the steel or other metal components, a once separated from the agglomerates deriving from the white slag, they can be stored. Preferably, the method according to the present invention provides that the agglomerates deriving from the solidification of the steel or other metal components, once separated from the agglomerates deriving from the white slag, are divided according to the type of casting. Preferably, said agglomerates deriving from the solidification of steel or other metal components are subdivided by casting, thus obtaining a subdivision of the agglomerates according to the type of steel that is formed in the electric arc furnace 2.

Advantageously, in a possible form of embodiment of the present invention, the cooling device 20 - which comprises a tubular reactor rotating around its longitudinal axis of development, is mobile and, preferably, can be self-propelled or towed.

In particular, the cooling device 20 receives the material 1, which is formed/located on/in correspondence with the ladle furnace 12 and which comes out of the latter.

Conveniently, the cooling device 20 can be fixed and positioned immediately downstream and at the outlet of the ladle furnace (LF) 12.

Preferably, the cooling device 20 can be mobile to position itself immediately downstream and at the outlet of the ladle furnace. (LF) 12. In particular, the cooling device 20 is configured to be moved and arrive, preferably by rail, under the discharge opening/mouth of the ladle furnace 12, in order to thus receive the material found at the/on the bottom of the ladle furnace 12 directly from the ladle furnace itself.

Conveniently, when it receives the material 1, the reactor of the cooling device 20 is already operational and in operation, thus causing the material to cool. Preferably, the cooling in the reactor of the cooler 20 always remains active.

Conveniently, once the loading of the chamber 16 of the cooling device 20 has been completed (which, for example, takes place in about 3 minutes), the latter is moved so as to move it away from the ladle furnace 12, thus arriving at a treatment station. or storage and sorting 21. Advantageously, the cooling device 20 continues to cool the material 1 received from the ladle furnace 12 during the entire movement path away from the ladle furnace 12. In particular, the cooling is continuous and remains active during handling of the cooling device 20 away from the ladle furnace 12, and advantageously the relative times substantially correspond to the casting times of the electric arc furnace 2 (EAF).

Advantageously, at the outlet from the cooling device 20, the agglomerates deriving from the solidification of the white slag - suitably separated from the agglomerates deriving from the solidification of the steel of other metal components - mainly comprise reactive lime, aluminates, silicates and magnesium oxides.

Conveniently - preferably in the treatment and/or storage and sorting station 21 - the agglomerates deriving from the white slag are prepared/treated, in order to return them to the loading of the electric arc furnace 2 or to prepare them for use as a binder in the building sector.

Advantageously, the addition of any additives, aimed in particular at enhancing the final use of the product in the building and gripping materials sector, takes place outside the ladle furnace 12 and, in particular, occurs at the discharge of the material 1 (containing white slag) from the ladle furnace 12 to the cooler.

Advantageously, in the treatment and/or storage and sorting station 21, the cooling device 20 engages and/or interacts with other modules, for example a separation module, preferably magnetic, and other treatment modules of the compound so as to prepare it to subsequent phases or uses; preferably, in the case of return to the electric arc furnace 2, in the treatment and/or storage and sorting station 21 there can be only one transport module, preferably pneumatic, to carry the agglomerates of white slag - once separated from the resulting agglomerates from steel or other metal components - to the loading zone of the electric arc furnace 2; in the case of external use, for use as a binder for building, the storage and sorting station 21 can comprise a bagging plant.

Advantageously, therefore, in the method/apparatus according to the invention, the use of the cauldron is no longer provided, thus allowing a reduction in processing times, a reduction in costs and risks for the personnel, obtained in the face of the fact that movement of the means of transport is provided between the ladle furnace 12 and the unloading area (hole), thus freeing up handling spaces inside the steel plant and also avoiding the risks deriving from the handling of incandescent materials.

In a possible embodiment thereof (see Fig. 4), the present invention also relates to a method which provides for the use of a cauldron 30, preferably an improved cauldron. In particular, the cauldron according to the invention is characterized in that it is configured in such a way as to be filled with a single casting coming out of the ladle furnace 12, and therefore has smaller dimensions than the traditional ones which are usually filled with 2, 3 or more castings.

Conveniently, the pan 30 can be mobile, preferably it can be self-propelled or towed.

Conveniently, the cauldron 30 is readily capped when it receives the casting of material 1 coming out of the ladle furnace 12.

Conveniently, the cooling device 20 is then loaded from the cauldron 30 as described above. Preferably, the cooling device 20 is already located in the treatment and/or storage and sorting station 21, as described above.

Conveniently, in the event that the final product is not destined to return in the loading phase of the electric arc furnace 2, the additives aimed in particular at enhancing the final use of the product in the sector of finalized construction, and in particular in the sector of binders mainly intended for construction.

Advantageously, the pan 30 is advantageously configured in such a way as to be kept heated at a temperature above about 1000°C.

Advantageously, in the various solutions according to the present invention, the presence of a hole or an unloading area protected from the wind is no longer required, as well as the use of mechanical shovels and means for transporting the material towards the exterior of the steel plant.

As is clear from what has been described, the method according to the invention is particularly advantageous, since:
- it allows to overcome the drawbacks of the known solutions, in particular by avoiding the numerous movements of the white slag provided in said known solutions; in more detail, this allows to avoid the purchase and use of means of handling and transport between the various areas, thus obtaining an important reduction in costs,
- the agglomerates obtained are less dusty (in fact they have a particle size greater than about 1mm, preferably greater than 2-5 mm) and, therefore, are easier to store, handle and manage and, moreover, the environment - in particular the steel mill - it is cleaner, as well as decreasing water consumption,
- allows to treat the white slag in order to obtain more quickly a stable and high quality material which can then be suitably reused within the process itself and/or which can be used for various applications, for example as a base for cements
- does not require any leachate treatment plant as there is no direct contact of the white slag with water or other cooling fluid,
- does not require to have large spaces available for collection areas or storage areas and also does not require special or dedicated structural or flooring/cladding works,
- is able to increase energy efficiency, is able to increase safety for operators and equipment and is also highly reliable in construction and operation,
- it allows to cool the white slag and the molten or semi-molten/viscous steel (or other metal alloys) exiting the ladle furnace in an optimal manner, i.e. it obtains an optimal cooling of the white slag and the molten or semi-molten/viscous steel while obtaining the aforementioned high energy efficiency;
- it is easy to implement and with low costs.
- it is an alternative and an improvement to the known solutions.

The present invention has been illustrated and described in some of its preferred embodiments, but it is understood that executive variations may apply thereto in practice, without however departing from the scope of protection of the claims.

## Claims

1. Method for treating material (1) formed/found at the bottom of a ladle furnace (12), said material comprising white slag containing lime or lime-based compounds and also comprising a metal alloy, preferably steel, in the molten or semi-molten/viscous state, **characterized in that** said material (1) that exits from said ladle furnace (12) cools for a period of time less than about 30-45 minutes, preferably for less than 10-15 minutes, and even more preferably for less than 1-3 minutes,
and **characterized in that**:
- it is cooled indirectly the material (1) from a temperature T_{IN}, where the white slag and the molten metal alloy present in said material (1) is found in the molten or semi-molten/viscous state, until it reaches an outlet temperature equal to or lower than T_{OUT}, which is lower than T_{IN} and in which the material is in the form of solidified aggregates,
- said temperature T_{OUT} corresponds to a temperature which is suitable for the subsequent manipulation of the aggregates formed inside a cooling device (20), wherein the temperature T_{OUT} is equal to or lower than about 180 - 200°C, preferably it is equal to or lower than about 70 - 100°C,
- said cooling device is a tubular reactor (20).

2. Method according to claim 1, **characterized in that** said cooling device (20) is movable, and is preferably self-propelled or towed.

3. Method according to one or more of the preceding claims, **characterized in that** said material (1) is further cooled immediately after its exit from the ladle furnace (2) by:
- by direct heat exchange with a nebulized cooling fluid, and/or
- by means of a jet/spray of a mix, preferably an aerosol, of gas with drops of liquid which come into direct contact with said material (1).

4. Method according to one or more of the preceding claims, **characterized in that**:
- said material (1) is cooled immediately after its exit from the ladle furnace (2) by means of said cooling device (20) comprising a tubular reactor rotating around its longitudinal development axis (X),
- the cooling of the material (1) is carried out in said cooling device (20) which is positioned or positionable at the ladle furnace (12) for receiving so the material (1) directly exiting from said ladle furnace (12).

5. Method according to one or more of the preceding claims, **characterized in that** the cooling of the material (1) is carried out in a cooling device (20), preferably a rotating reactor, which comprises means for the indirect cooling of the material (1) which enters and/or passes through a chamber (16) of said cooling device (20), said means comprising:
- means for spraying a cooling fluid on the outer surface of said wall, and/or
- means for dropping a cooling fluid onto the external surface of said wall, and/or
- cooling plates fixed to said wall and including ducts for the circulation of a cooling fluid, and/or
- at least one interspace which is externally defined around said wall and which defines a chamber permeated by a cooling fluid.

6. Method according to one or more of the preceding claims, **characterized in that** the material (1) leaving the ladle furnace (2) is cooled, and which is at a temperature T_{IN} of about 1400-1800°C.

7. Method according to one or more of the preceding claims, **characterized by** the fact that:
- it is cooled indirectly the material (1), which has been loaded inside the tubular reactor of the cooling device (20), from a temperature T₁ to a temperature T₂, which is lower than T₁, and during said cooling said tubular reactor is made to rotate around its longitudinal development axis (X), thus obtaining the formation of aggregates deriving from the white slag and of agglomerates deriving from the components of the metal alloy, preferably of steel.
- the temperature T_{IN}, corresponding to the temperature of the material (1) in output from the ladle furnace (12) and input to the cooling device (20), is equal to or greater than T_{1.}
- the temperature T_{OUT}, corresponding to the outlet temperature of the agglomerates from the cooling device (20), is equal or lower than T_{2.}.

8. Method according to one or more of the preceding claims, **characterized in that** it is cooled, preferably indirectly, the material (1), which has been loaded inside the tubular reactor of the cooling device (20), to make it pass from said temperature T_{IN} to a temperature equal to or lower than T_{OUT} in a time such as to cause the formation of first solid agglomerates with the components of the white slag contained in the material (1) and of second/distinct solid agglomerates with the components of the metal alloy, preferably steel, contained in the material (1).

9. Method according to one or more of the preceding claims, **characterized in that** it is cooled, preferably indirectly, the material (1), which has been loaded inside the tubular reactor of the cooling device (20), to make it pass from said temperature T_{IN} at a temperature equal to or lower than T_{OUT} in less than about a minute and while said tubular reactor is made to rotate around its longitudinal development axis (X), thus obtaining the formation of agglomerates deriving from the white slag and agglomerates deriving from the components of the metal alloy, preferably of steel.

10. Method according to one or more of the preceding claims, **characterized in that** it is cooled, preferably indirectly, the material (1), which has been loaded inside the tubular reactor of the cooling device (20), to make it pass from said temperature T₁ at a temperature equal to or lower than T₂ in less than about a minute and while said tubular reactor is rotated around its longitudinal development axis (X), thus obtaining the formation of agglomerates deriving from the white slag and agglomerates deriving from the components of the metal alloy, preferably of steel.

11. Method according to one or more of the preceding claims, **characterized in that** output from said cooling device solids are obtained agglomerates with the components of the white slag contained in the material (1) and second/separate solid agglomerates with the components of the metal alloy, preferably steel, contained in the material (1).

12. Method according to one or more of the preceding claims, **characterized in that** a mixture of said first solid agglomerates with the components of the white slag contained in the material (1) with said second/distinct solid agglomerates is obtained at the outlet from said cooling device with the components of the metal alloy, preferably steel, contained in the material (1).

13. Method according to one or more of the preceding claims, **characterized in that** the cooling of the material (1) inside the cooling device (20) from the temperature T₁ to T₂ is carried out in less than about one minute.

14. Method according to one or more of the preceding claims, **characterized in that** the agglomerates formed inside the cooling device (20) are separated according to the type of components/materials of which said agglomerates are made.

15. Method according to one or more of the preceding claims, **characterized by** the fact that, at the outlet of said cooling device (20) and/or downstream of said cooling device (20), separating said first solid agglomerates comprising the components of the white slag contained in the material (1) from said second/distinct solid agglomerates comprising the components of the metal alloy, preferably of the steel, contained in the material (1).

## Patentansprüche

1. Verfahren zur Behandlung von Material (1), das am Boden eines Pfannenofens (12) gebildet wird/sich befindet, wobei das Material weiße Schlacke umfasst, die Kalk oder kalkbasierte Verbindungen enthält, und auch eine Metalllegierung, vorzugsweise Stahl, im geschmolzenen oder halbgeschmolzenen/viskosen Zustand umfasst, **dadurch gekennzeichnet, dass** das aus dem Pfannenofen (12) austretende Material (1) für einen Zeitraum von weniger als etwa 30-45 Minuten, vorzugsweise für weniger als 10-15 Minuten und noch bevorzugter für weniger als 1-3 Minuten abgekühlt wird,
und **dadurch gekennzeichnet, dass**
- das Material (1) indirekt von einer Temperatur T_{IN} abgekühlt wird, bei der sich die weiße Schlacke und die in dem Material (1) vorhandene geschmolzene Metalllegierung im geschmolzenen oder halbgeschmolzenen/viskosen Zustand befinden, bis es eine Austrittstemperatur gleich oder niedriger als T_{OUT} erreicht, die niedriger als T_{IN} ist und bei der das Material in Form von erstarrten Aggregaten vorliegt,
- die Temperatur T_{OUT} einer Temperatur entspricht, die für die anschließende Handhabung der im Inneren einer Kühlvorrichtung (20) gebildeten Aggregate geeignet ist, wobei die Temperatur T_{OUT} gleich oder niedriger als etwa 180 - 200 °C, vorzugsweise gleich oder niedriger als etwa 70 - 100 °C ist,
- die Kühlvorrichtung ein Rohrreaktor (20) ist.

2. Verfahren nach Anspruch 1, **dadurch gekennzeichnet, dass** die Kühlvorrichtung (20) mobil, vorzugsweise selbstfahrend oder geschleppt ist.

3. Verfahren nach einem oder mehreren der vorhergehenden Ansprüche, **dadurch gekennzeichnet, dass** das Material (1) unmittelbar nach seinem Austritt aus dem Pfannenofen (2) weiter abgekühlt wird durch:
- durch direkten Wärmeaustausch mit einem zerstäubten Kühlfluid, und/oder
- mittels eines Strahls/Sprühens eines Gemischs, vorzugsweise eines Aerosols, aus Gas mit Flüssigkeitstropfen, die in direkten Kontakt mit dem Material (1) kommen.

4. Verfahren nach einem oder mehreren der vorhergehenden Ansprüche, **dadurch gekennzeichnet, dass**:
- das Material (1) unmittelbar nach seinem Austritt aus dem Pfannenofen (2) mittels der Kühlvorrichtung (20), die einen um seine Längsentwicklungsachse (X) rotierenden Rohrreaktor umfasst, abgekühlt wird,
- die Abkühlung des Materials (1) in der Kühlvorrichtung (20) durchgeführt wird, die am Pfannenofen (12) positioniert oder positionierbar ist, um so das direkt aus dem Pfannenofen (12) austretende Material (1) aufzunehmen.

5. Verfahren nach einem oder mehreren der vorhergehenden Ansprüche, **dadurch gekennzeichnet, dass** die Abkühlung des Materials (1) in einer Kühlvorrichtung (20), vorzugsweise einem rotierenden Reaktor, durchgeführt wird, die Mittel zur indirekten Abkühlung des Materials (1) umfasst, das in eine Kammer (16) der Kühlvorrichtung (20) eintritt und/oder durch diese hindurchtritt, wobei die Mittel Folgendes umfassen:
- Mittel zum Aufsprühen eines Kühlfluids auf die Außenfläche der Wand und/oder
- Mittel zum Abtropfen eines Kühlfluids auf die Außenfläche der Wand und/oder
- Abkühlen der Platten, die an der Wand befestigt sind und Leitungen für die Zirkulation eines Kühlfluids enthalten, und/oder
- mindestens einen Zwischenraum, der außen um die Wand definiert ist und der eine von einem Kühlfluid durchdrungene Kammer definiert.

6. Verfahren nach einem oder mehreren der vorhergehenden Ansprüche, **dadurch gekennzeichnet, dass** das den Pfannenofen (2) verlassende Material (1) gekühlt wird und sich auf einer Temperatur T_{IN} von etwa 1400-1800 °C befindet.

7. Verfahren nach einem oder mehreren der vorhergehenden Ansprüche, **dadurch gekennzeichnet, dass**:
- das Material (1), das in den Rohrreaktor der Kühlvorrichtung (20) geladen wurde, indirekt von einer Temperatur T₁ auf eine Temperatur T₂ abgekühlt wird, die niedriger als T₁ ist, und während der Abkühlung der Rohrreaktor um seine Längsentwicklungsachse (X) in Rotation versetzt wird, wodurch die Bildung von aus der weißen Schlacke stammenden Aggregaten und von aus den Bestandteilen der Metalllegierung, vorzugsweise aus Stahl, stammenden Agglomeraten erzielt wird.
- die Temperatur T_{IN}, die der Temperatur des Materials (1) entspricht, das aus dem Pfannenofen (12) ausgegeben und in die Kühlvorrichtung (20) eingegeben wird, gleich oder größer als T₁ ist.
- die Temperatur T_{OUT}, die der Austrittstemperatur der Agglomerate aus der Kühlvorrichtung (20) entspricht, gleich oder niedriger als T₂ ist.

8. Verfahren nach einem oder mehreren der vorhergehenden Ansprüche, **dadurch gekennzeichnet, dass** das Material (1), das in den Rohrreaktor der Kühlvorrichtung (20) geladen wurde, vorzugsweise indirekt gekühlt wird, um es von der Temperatur T_{IN} auf eine Temperatur, die gleich oder niedriger als T_{OUT} ist, in einer Zeit zu bringen, um die Bildung von ersten festen Agglomeraten mit den Bestandteilen der weißen Schlacke, die in dem Material (1) enthalten sind, und von zweiten/unterschiedlichen festen Agglomeraten mit den Bestandteilen der Metalllegierung, vorzugsweise Stahl, die in dem Material (1) enthalten sind, zu bewirken.

9. Verfahren nach einem oder mehreren der vorhergehenden Ansprüche, **dadurch gekennzeichnet, dass** das Material (1), das in den Rohrreaktor der Kühlvorrichtung (20) geladen wurde, vorzugsweise indirekt gekühlt wird, um es von der Temperatur T_{IN} bei einer Temperatur, die gleich oder niedriger als T_{OUT} ist, in weniger als etwa einer Minute zu bringen, und während der Rohrreaktor in Rotation um seine Längsentwicklungsachse (X) versetzt wird, wodurch die Bildung von aus der weißen Schlacke stammenden Aggregaten und von aus den Bestandteilen der Metalllegierung, vorzugsweise aus Stahl, stammenden Agglomeraten erzielt wird.

10. Verfahren nach einem oder mehreren der vorhergehenden Ansprüche, **dadurch gekennzeichnet, dass** das Material (1), das in den Rohrreaktor der Kühlvorrichtung (20) geladen wurde, vorzugsweise indirekt gekühlt wird, um es von der Temperatur T₁ bei einer Temperatur, die gleich oder niedriger als T₂ ist, in weniger als etwa einer Minute zu bringen, und während der Rohrreaktor um seine Längsentwicklungsachse (X) gedreht wird, wodurch die Bildung von aus der weißen Schlacke stammenden Aggregaten und von aus den Bestandteilen der Metalllegierung, vorzugsweise aus Stahl, stammenden Agglomeraten erzielt wird.

11. Verfahren nach einem oder mehreren der vorhergehenden Ansprüche, **dadurch gekennzeichnet, dass** aus der Kühlvorrichtung Feststoffe als Agglomerate mit den Bestandteilen der weißen Schlacke, die im Material (1) enthalten sind und zweite/separate feste Agglomerate mit den Bestandteilen der Metalllegierung, vorzugsweise Stahl, die im Material (1) enthalten sind, als Ausgabe erhalten werden.

12. Verfahren nach einem oder mehreren der vorhergehenden Ansprüche, **dadurch gekennzeichnet, dass** ein Gemisch der ersten festen Agglomerate mit den Bestandteilen der weißen Schlacke, die im Material (1) enthalten sind, mit den zweiten/unterschiedlichen festen Agglomeraten am Auslass der Kühlvorrichtung mit den Bestandteilen der Metalllegierung, vorzugsweise Stahl, die im Material (1) enthalten sind, erhalten wird.

13. Verfahren nach einem oder mehreren der vorhergehenden Ansprüche, **dadurch gekennzeichnet, dass** die Abkühlung des Materials (1) innerhalb der Kühlvorrichtung (20) von der Temperatur T₁ auf T₂ in weniger als etwa einer Minute durchgeführt wird.

14. Verfahren nach einem oder mehreren der vorhergehenden Ansprüche, **dadurch gekennzeichnet, dass** die innerhalb der Kühlvorrichtung (20) gebildeten Agglomerate nach der Art der Bestandteile/Materialien, aus denen diese Agglomerate bestehen, getrennt werden.

15. Verfahren nach einem oder mehreren der vorhergehenden Ansprüche, **dadurch gekennzeichnet, dass** am Auslass der Kühlvorrichtung (20) und/oder stromabwärts der Kühlvorrichtung (20) die ersten festen Agglomerate, umfassend die Bestandteile der weißen Schlacke, die im Material (1) enthalten sind, von den zweiten/unterschiedlichen festen Agglomeraten, umfassend die Bestandteile der Metalllegierung, vorzugsweise des Stahls, die im Material (1) enthalten sind, getrennt werden.

## Revendications

1. Procédé de traitement de matériau (1) formé/trouvé au fond d'un four-poche (12), ledit matériau comprenant des scories blanches contenant de la chaux ou des composés à base de chaux et comprenant également un alliage métallique, de préférence de l'acier, à l'état fondu ou semi-fondu/visqueux, **caractérisé en ce que** ledit matériau (1) qui sort dudit four-poche (12) refroidit pendant une période de temps inférieure à environ 30-45 minutes, de préférence pendant moins de 10-15 minutes, et encore plus préférentiellement pendant moins de 1-3 minutes,
et **caractérisé en ce que** :
- le matériau (1) est refroidi indirectement à partir d'une température T_{IN}, où les scories blanches et l'alliage métallique fondu présents dans ledit matériau (1) se trouvent à l'état fondu ou semi-fondu/visqueux, jusqu'à ce qu'ils atteignent une température de sortie égale ou inférieure à T_{OUT}, qui est inférieure à T_{IN} et dans lequel le matériau se présente sous la forme d'agrégats solidifiés,
- ladite température T_{OUT} correspond à une température qui est adaptée à la manipulation ultérieure des agrégats formés à l'intérieur d'un dispositif de refroidissement (20), la température T_{OUT} étant égale ou inférieure à environ 180 - 200°C, de préférence égale ou inférieure à environ 70 - 100°C,
- ledit dispositif de refroidissement est un réacteur tubulaire (20).

2. Procédé selon la revendication 1, **caractérisé en ce que** ledit dispositif de refroidissement (20) est mobile, et est de préférence auto-propulsé ou remorqué.

3. Procédé selon l'une ou plusieurs des revendications précédentes, **caractérisé en ce que** ledit matériau (1) est en outre refroidi immédiatement après sa sortie du four-poche (2) :
- par échange thermique direct avec un fluide de refroidissement nébulisé, et/ou
- au moyen d'un jet/d'une pulvérisation d'un mélange, de préférence un aérosol, de gaz avec des gouttes de liquide qui entrent en contact direct avec ledit matériau (1).

4. Procédé selon l'une ou plusieurs des revendications précédentes, **caractérisé en ce que** :
- ledit matériau (1) est refroidi immédiatement après sa sortie du four-poche (2) au moyen dudit dispositif de refroidissement (20) comprenant un réacteur tubulaire tournant autour de son axe de développement longitudinal (X),
- le refroidissement du matériau (1) est effectué dans ledit dispositif de refroidissement (20) étant positionné ou pouvant être positionné au niveau du four-poche (12) pour recevoir ainsi le matériau (1) sortant directement dudit four-poche (12).

5. Procédé selon l'une ou plusieurs des revendications précédentes, **caractérisé en ce que** le refroidissement du matériau (1) est effectué dans un dispositif de refroidissement (20), de préférence un réacteur rotatif, qui comprend des moyens de refroidissement indirect du matériau (1) qui entrent et/ou passent à travers une chambre (16) dudit dispositif de refroidissement (20), lesdits moyens comprenant :
- des moyens de pulvérisation d'un fluide de refroidissement sur la surface extérieure de ladite paroi, et/ou
- des moyens pour faire tomber un fluide de refroidissement sur la surface extérieure de ladite paroi, et/ou
- des plaques de refroidissement fixées à ladite paroi et comportant des conduits pour la circulation d'un fluide de refroidissement, et/ou
- au moins un espace intermédiaire qui est défini extérieurement autour de ladite paroi et qui définit une chambre imprégnée d'un fluide de refroidissement.

6. Procédé selon l'une ou plusieurs des revendications précédentes, **caractérisé en ce que** le matériau (1) sortant du four-poche (2) est refroidi, et qui est à une température T_{IN} d'environ 1400-1800°C.

7. Procédé selon l'une ou plusieurs des revendications précédentes, **caractérisé par le fait que** :
- le matériau (1), qui a été chargé à l'intérieur du réacteur tubulaire du dispositif de refroidissement (20), est refroidi indirectement, d'une température T₁ à une température T₂, qui est inférieure à T₁, et pendant ledit refroidissement, ledit réacteur tubulaire est amené à tourner autour de son axe de développement longitudinal (X), obtenant ainsi la formation d'agrégats dérivant des scories blanches et d'agglomérats dérivant des composants de l'alliage métallique, de préférence de l'acier.
- la température T_{IN}, correspondant à la température du matériau (1) à la sortie du four-poche (12) et à l'entrée du dispositif de refroidissement (20), est égale ou supérieure à T_{1.}
- la température T_{OUT}, correspondant à la température de sortie des agglomérés du dispositif de refroidissement (20), est égale ou inférieure à T₂.

8. Procédé selon l'une ou plusieurs des revendications précédentes, **caractérisé en ce que** le matériau (1) qui a été chargé à l'intérieur du réacteur tubulaire du dispositif de refroidissement (20) est refroidi, de préférence indirectement, pour le faire passer de ladite température T_{IN} à une température égale ou inférieure à T_{OUT} dans un temps tel qu'il provoque la formation de premiers agglomérats solides avec les composants des scories blanches contenus dans le matériau (1) et d'agglomérats solides secondaires/distincts avec les composants de l'alliage métallique, de préférence de l'acier, contenus dans le matériau (1).

9. Procédé selon l'une ou plusieurs des revendications précédentes, **caractérisé en ce que** le matériau (1) qui a été chargé à l'intérieur du réacteur tubulaire du dispositif de refroidissement (20) est refroidi, de préférence indirectement, pour le faire passer de ladite température T_{IN} à une température égale ou inférieure à T_{OUT} en moins d'une minute environ et pendant que ledit réacteur tubulaire est amené à tourner autour de son axe de développement longitudinal (X), obtenant ainsi la formation d'agglomérats dérivant des scories blanches et d'agglomérats dérivant des composants de l'alliage métallique, de préférence de l'acier.

10. Procédé selon l'une ou plusieurs des revendications précédentes, **caractérisé en ce que** le matériau (1) qui a été chargé à l'intérieur du réacteur tubulaire du dispositif de refroidissement (20) est refroidi, de préférence indirectement, pour le faire passer de ladite température T₁ à une température égale ou inférieure à T₂ en moins d'une minute environ et pendant que ledit réacteur tubulaire est amené à tourner autour de son axe de développement longitudinal (X), obtenant ainsi la formation d'agglomérats dérivant des scories blanches et d'agglomérats dérivant des composants de l'alliage métallique, de préférence de l'acier.

11. Procédé selon l'une ou plusieurs des revendications précédentes, **caractérisé en ce qu'**à la sortie dudit dispositif de refroidissement, sont obtenus des agglomérats solides avec les composants des scories blanches contenu dans le matériau (1) et des agglomérats solides secondaires/séparés avec les composants de l'alliage métallique, de préférence de l'acier, contenus dans le matériau (1).

12. Procédé selon l'une ou plusieurs des revendications précédentes, **caractérisé en ce qu'**un mélange desdits premiers agglomérats solides avec les composants des scories blanches contenus dans le matériau (1) avec lesdits agglomérats solides secondaires/distincts est obtenu à la sortie dudit dispositif de refroidissement avec les composants de l'alliage métallique, de préférence de l'acier, contenus dans le matériau (1).

13. Procédé selon l'une ou plusieurs des revendications précédentes, **caractérisé en ce que** le refroidissement du matériau (1) à l'intérieur du dispositif de refroidissement (20) de la température T₁ à T₂ est effectué en moins d'une minute environ.

14. Procédé selon l'une ou plusieurs des revendications précédentes, **caractérisé en ce que** les agglomérats formés à l'intérieur du dispositif de refroidissement (20) sont séparés selon le type de composants/matériaux dont sont constitués lesdits agglomérats.

15. Procédé selon l'une ou plusieurs des revendications précédentes, **caractérisé en ce que**, à la sortie dudit dispositif de refroidissement (20) et/ou en aval dudit dispositif de refroidissement (20), la séparation desdits premiers agglomérats solides comprenant les composants des scories blanches contenus dans le matériau (1) à partir desdits agglomérats solides secondaires/distincts comprenant les composants de l'alliage métallique, de préférence de l'acier, contenus dans le matériau (1).
